# EUROPEAN PATENT SPECIFICATION

(11) **EP 3 587 169 B1**
(45) Date of publication and mention of the grant of the patent: **10.01.2024**
(21) Application number: 19181661.0
(22) Date of filing: 21.06.2019
(51) Int. Cl.: B60L 53/16, B60L 53/30, H01R 3/00

(54) **INLET ELECTRIC CONNECTOR UNIT FOR RECHARGING AN ELECTRIC VEHICLE OR A HYBRID VEHICLE**
ELEKTRISCHE EINGANGSANSCHLUSSEINHEIT ZUM NACHLADEN EINES ELEKTROFAHRZEUGS ODER EINES HYBRIDFAHRZEUGS
UNITÉ DE CONNECTEUR ÉLECTRIQUE D'ENTRÉE POUR RECHARGER UN VÉHICULE ÉLECTRIQUE OU UN VÉHICULE HYBRIDE

(30) Priority: 25.06.2018 IT 201800006615
(43) Date of publication of application: 01.01.2020
(73) Proprietor: TE Connectivity Italia Distribution S.r.l., 10093 Collegno (TO) (IT)
(72) Inventor: SPINCICH, Mr. Demis, I-10093 Collegno (Torino) (IT); GENTA, Mr. Alessandro, I-10093 Collegno (Torino) (IT)
(74) Representative: Notaro, Giancarlo

(56) References cited:
- DE-A1-102016 000 311
- US-A- 5 757 595
- US-A1- 2011 246 014

## Description

### Field of the invention

The present invention relates to an inlet connector unit for recharging one or more batteries of an electric vehicle or a hybrid vehicle, of the type comprising a connector body adapted to be mounted on a vehicle and having a plurality of inlet electric contacts adapted to receive cooperating contacts of a connector carried by a recharging cable, wherein the connector body has a central portion having said inlet electric contacts.

### Prior art

Inlet electric connector units, for recharging electric vehicles or hybrid vehicles, have already been proposed, having a human-machine interface (HMI) associated thereto, through which a user can control, and/or receive information on the recharging operation, for example on the state of charge of the vehicle battery, during the recharging operation. Connector units of this type have been disclosed for example in DE 10 2016 000311 A1, JP 07087607 A and DE 10 2012 004874 A1. Document US 5 757 595 A shows a conventional solution for a recharging connector for an electric vehicle in which a display panel is provided which is arranged as a unit separate from the connector body. It is also to be noted that it is also known in the art (see US 2011/246014 A1) to provide a modular structure, including removable units, for a stationary column for recharging electric vehicles.

### Object of the invention

The object of the present invention is that of providing an inlet electric connector unit for recharging an electric vehicle or a hybrid vehicle, having a relatively simple and inexpensive structure, conceived according to a modularity criteria, so as to enable mass production, at relatively low cost, of a connector unit which can be easily configured with or without a human-machine interface or with different features of this interface, as a function of the specific needs of each application.

A further object of the invention is that of providing a connector unit of the above indicated type which can be provided with a human-machine interface and can be assembled and installed with simple and quick operations.

A further object of the invention is that of achieving the above indicated goals in a connector unit which is simple in use and reliable in operation.

### Summary of the invention

In view of achieving one or more of the above indicated objects, the invention provides an inlet electric connector unit for recharging an electric vehicle or a hybrid vehicle, having the features which have been indicated at the beginning of the present description and further characterized in that the connector body has at least one seat which opens on a front side of the connector body and located adjacent to said central portion having the inlet electric contacts, and in that in said seat there is removably received a human-machine interface (HMI) module for controlling and/or providing information on, a recharge operation.

In the preferred embodiment, the above mentioned seat is configured for receiving said HMI module by a sliding movement of the HMI within the seat.

Also in the case of the above mentioned preferred embodiment, the connector unit according to the invention comprises a HMI model including:
- a housing configured for being received within said seat of the connector body,
- at least one electronic board mounted within said housing, and
- a supporting body carrying a human-machine interface HMI and mounted at one end of said housing.

According to a further preferred feature, the connector body includes a supporting casing to which said central portion having the inlet electric contacts is removably connected and in that the seat for said HMI module is formed within said support casing.

As it is readily apparent from the foregoing, the connector unit according to the invention can be easily configured with a HMI module by mounting said module into the seat with which the body of the connector unit is provided. In an industrial mass production, the above feature enables to easily provide models of connector unit which are not equipped with a human-machine interface, as well as models of connector unit provided with an interface. Furthermore, due to the configuration of the HMI module, which has an interface carried by the above mentioned supporting body which is removably connected to the housing of the module, it is further possible to easily provide for the production of different models of connector unit with different models of interface. Further, in the above mentioned preferred embodiment, it is possible to provide different models of connector unit, including different configurations of the above mentioned central portion carrying the inlet electric contacts, while always using the same configuration of the supporting casing which is provided with the seat for the HMI module. Due to this further feature, it is thus possible to easily provide different models of connector unit by varying both the configuration of the central portion having the inlet electric contacts, and the configuration of the HMI module, including the case of a connector unit which is not provided with a HMI module.

The invention is also directed to the method of claim 7.

### Detailed description of the invention

Further features and advantages of the invention will become apparent from the following description with reference to the annexed drawings, given purely by way of non-limiting example, in which:
- figure 1 is a perspective view of an embodiment of the connector unit according to the invention with the HMI module removed,
- figure 2 shows the connector unit of figure 1 in a stage in which the HMI module is introduced into its seat in the body of the connector unit,
- figure 3 is a perspective view of the connector unit of figures 1, 2, with the HMI module mounted into its seat in the body of the connector unit,
- figures 4, 5 are a front perspective view and a rear perspective view of the HMI module,
- figures 6, 7 are perspective views of a detail of the housing of the HMI module and of the seat of the connector body in which it is received,
- figure 8 is an exploded perspective view of the HMI module and,
- figures 9-12 are perspective views which show different models of the connector unit which differ from the connector unit of figures 1-3 for a different configuration of the central portion of the connector unit, having the inlet electric contacts.

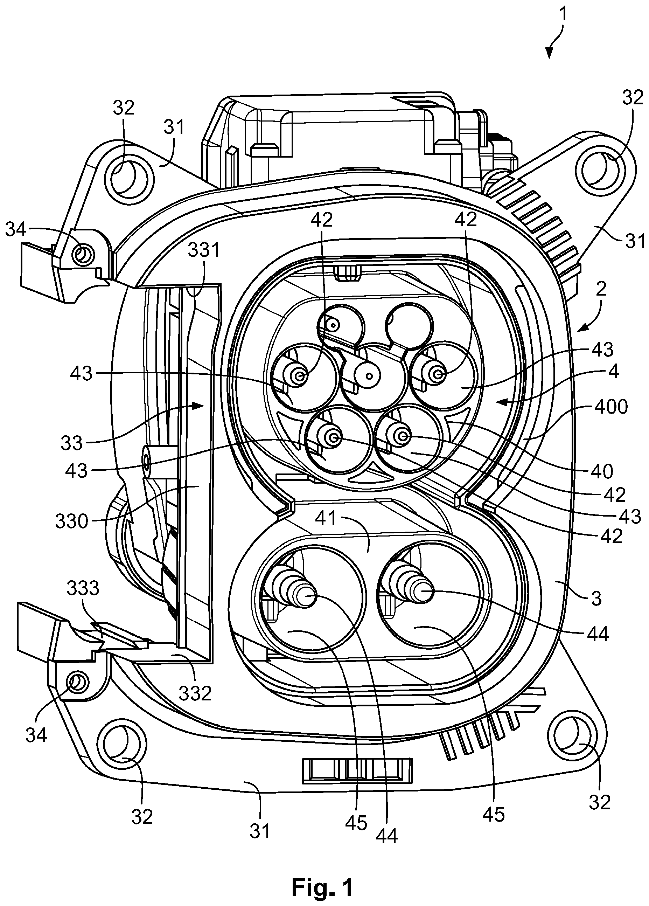

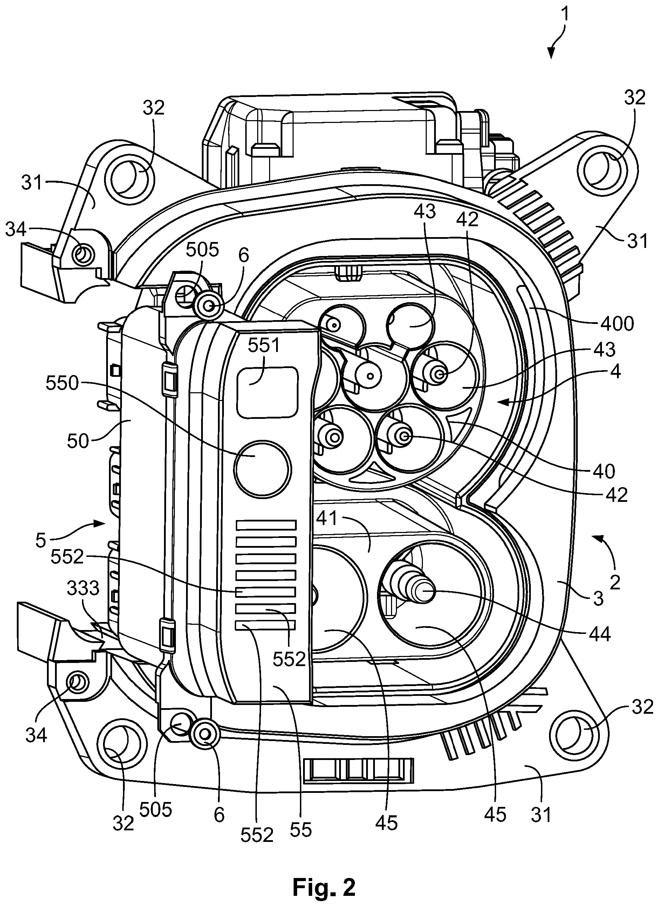

In figures 1-3, numeral 1 generally designates an inlet connector unit for recharging the battery of an electric vehicle or a hybrid vehicle. The connector unit 1 comprises a connector body made of plastic material, including a supporting casing 3 to which a central portion 4 is removably connected, which carries the inlet electric contacts of the connector unit, which are to cooperate with the electric contacts of a plug connector carried by a recharging cable.

In the present description, and in the annexed drawings, the details of construction relating to the connection between the central portion 4 carrying the inlet electric contacts and the supporting casing 3 are not shown, since they can be made in any known way. Also not shown, since they can be made in any known way, are the details relating to the single electric contacts and the way in which they are received and mounted within the central portion 4 of body 2 of the connector unit 1.

The supporting casing 3 has a configuration in form of a peripheral frame, with an aperture 30 which makes the central portion 4 accessible. The example shown in figures 1-3 relates to a model of connector unit whose a central portion 4 includes the combination of a portion 40 having inlet electric contacts for recharge with an alternate electric current, and a portion 41 having inlet electric contacts for a recharge with a direct electric current. Portion 40 includes a plurality of inlet electric contacts 42 arranged within respective receptacles 43. Portion 41 includes inlet electric contacts 44 arranged within respective receptacles 45.

In the illustrated example, the supporting casing also carries two lights 400 (one of which is visible in figures 1-3) arranged on both sides of the central portion, for illuminating the area of the inlet contacts.

The supporting casing 3 forming part of the body 2 of the connector unit also includes a plurality of flanges 31 in which holes 32 are formed for engagement of securing screws (not shown) serving for securing the connector unit 1 to a supporting structure of the vehicle, at a part which is accessible from outside of the vehicle.

With further reference to figures 1-3, the supporting casing 3 defines a seat 33 for mounting a module 5 carrying a human-machine interface (HMI).

In the illustrated example, the seat 33 is defined by a cavity formed by the body of the casing 3, on one side thereof, having a bottom wall 330 which is vertical and substantially planner, and two upper and lower end walls 331, 332. In the case of the illustrated example, the end walls 331, 332 are substantially planar, parallel to each other and substantially orthogonal to the bottom wall 300. Naturally, this configuration of the seat 33 is shown herein purely by way of example.

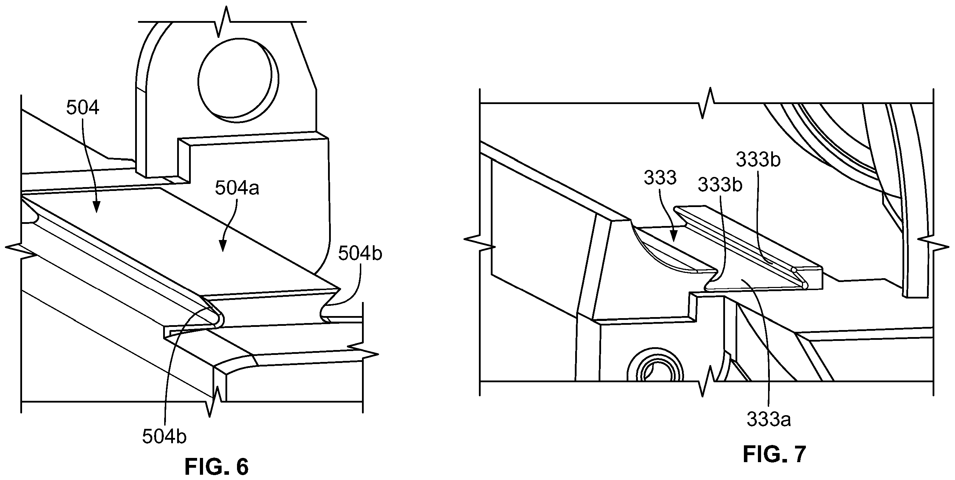

With further reference in particular to figure 1 and figure 7, adjacent to each of the end walls 331 and 332, the body of the supporting casing 3 defines a guiding groove 333 (drawings only show the groove 333 adjacent to wall 332 and visible at an enlarged scale in figure 7). The grooves 333 guide a sliding movement of the HMI module 5 for mounting thereof into the seat 33, as will be illustrated more in detail in the following. With reference to figure 7, each guiding groove 333 has a bottom surface 333a and two side surfaces 333b, converging towards each other so as to define, along with the bottom surface 333a, a dove-tail profile. Naturally, both the configuration of the seat 33 and the provision of the above-described guiding grooves are shown herein purely by way of example.

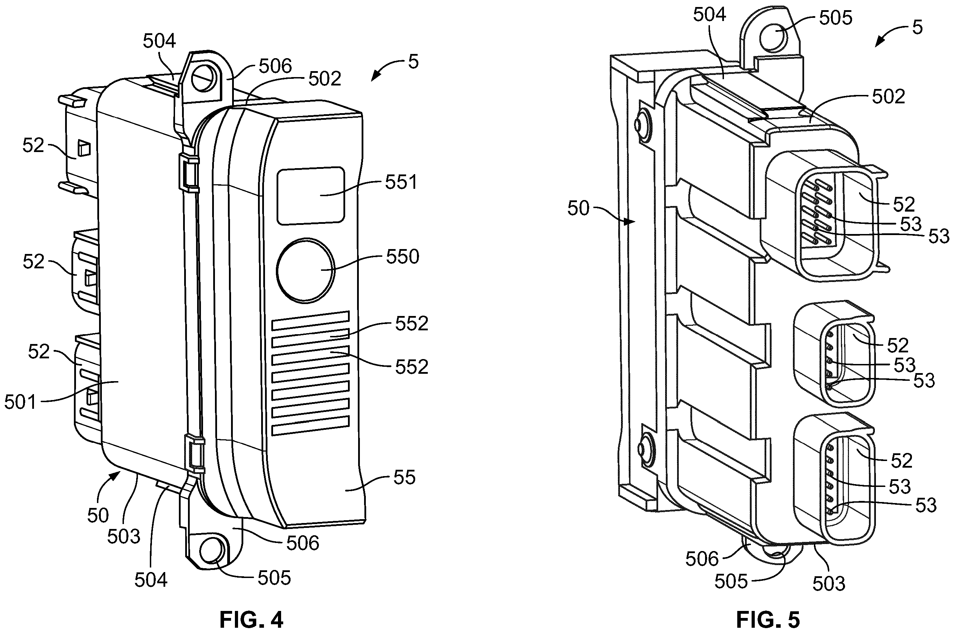

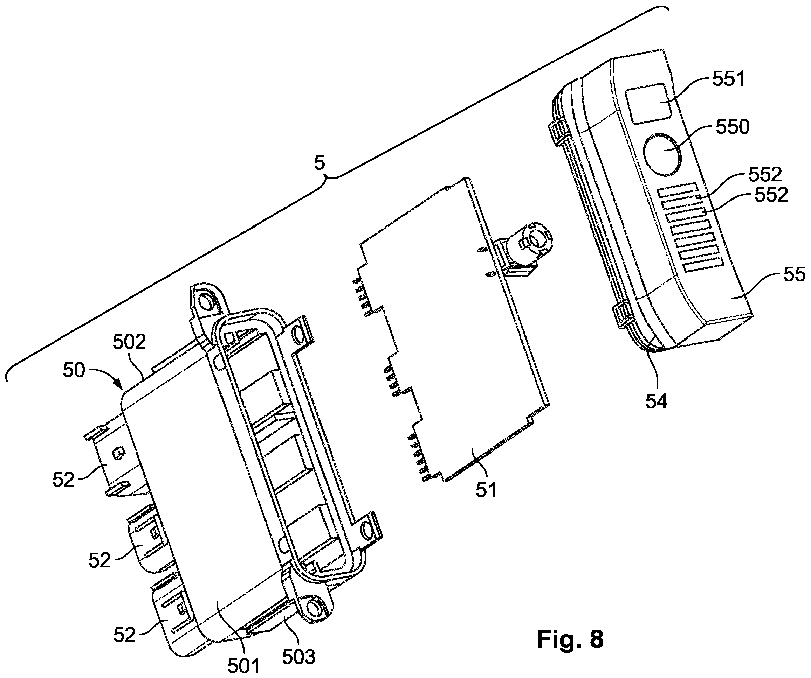

With reference to figures 4, 5, 8, the HMI module 5 comprises a housing 50 of plastic material into which one or more electronic boards PCB 51 carrying an electronic control circuit are mounted.

The rear end of the HMI module 5 comprises electric connectors 52 with electric contacts 53, for connection of the electronic board 51 to an electronic controller on board the vehicle.

At its front end, the housing 50 of the HMI module 5 is closed by a supporting body 54 carrying an interface 55.

By way of example, figure 4 shows an interface 55 including a button 550, by which it is possible, for example, to schedule the time for starting the recharging operation, a display 551, for example for displaying an operating mode which can be selected by the button 550, and a plurality of lights 552 which are progressively illuminated from the bottom to the top and which then remain illuminated, during the recharging operation, for displaying the state of charge of the battery of the vehicle.

Naturally, the configuration of the interface 55 shown in figure 4 is given herein purely by way of example. One of the advantages of the present invention lies in that the HMI module is configured for easily arranging the production of different interfaces as a function of the specific needs of the vehicle producer, thanks to the possibility of replacing the supporting body 54 carrying the interface 55.

With reference in particular to figures 4, 5, the housing 50 of the HMI module 5 has a front side carrying the interface 55, a rear side carrying the connectors 52, two vertical lateral walls 501, an upper wall 502 and a lower wall 503.

Both the upper wall 502 and the lower wall 503 are formed with a guiding rib 504 which is to cooperate with the respective groove 333 of the casing of the connector unit (figure 1). As visible in the detail at an enlarged scale of figure 6, each rib 504 has a top surface 504a and two sides 504b which diverge from each other so as to define a dove-tail-shaped profile corresponding to that of the respective groove 333 (figure 7).

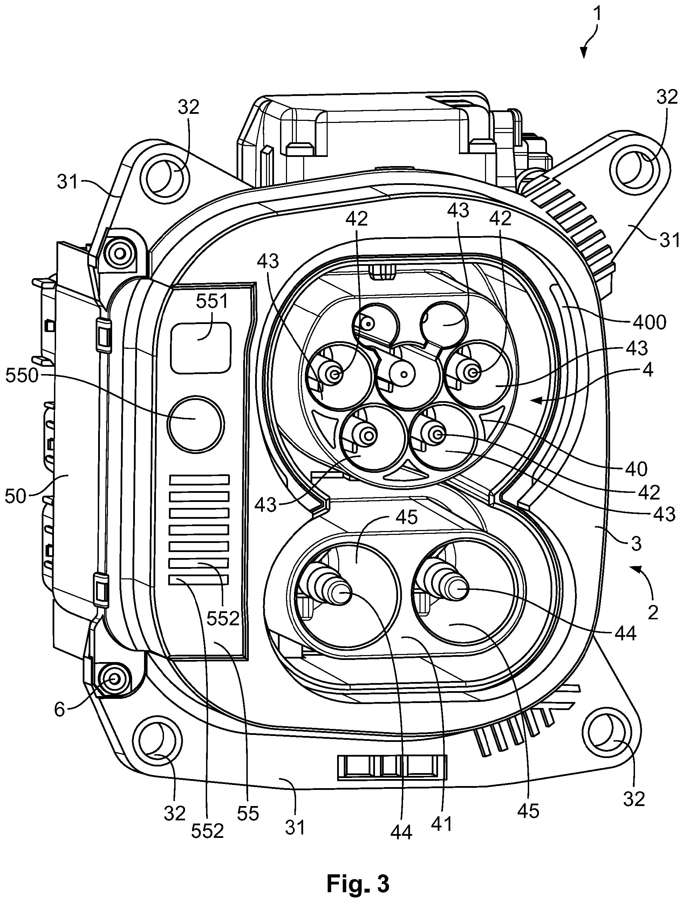

Figure 3 shows the stage of mounting of the HMI module 5 into the seat 33 of the casing 3 of the connector unit 1. The module 5 is inserted into the seat 33 by causing it to slide in a direction orthogonal to the front face of the connector unit, by engaging the ribs 504 into the respective guiding grooves 333. Once positioned in its condition completely mounted inside the seat 33, the HMI module 5 is secured to the casing 3 of the connector unit 1 by screws (not shown) which engage through holes 505 (figures 4, 5) formed in flanges 506 of the housing 50 of the HMI module 5, as well as in internally threaded bushes 34 carried by the flanges 31 of the supporting casing 3 (see figure 1).

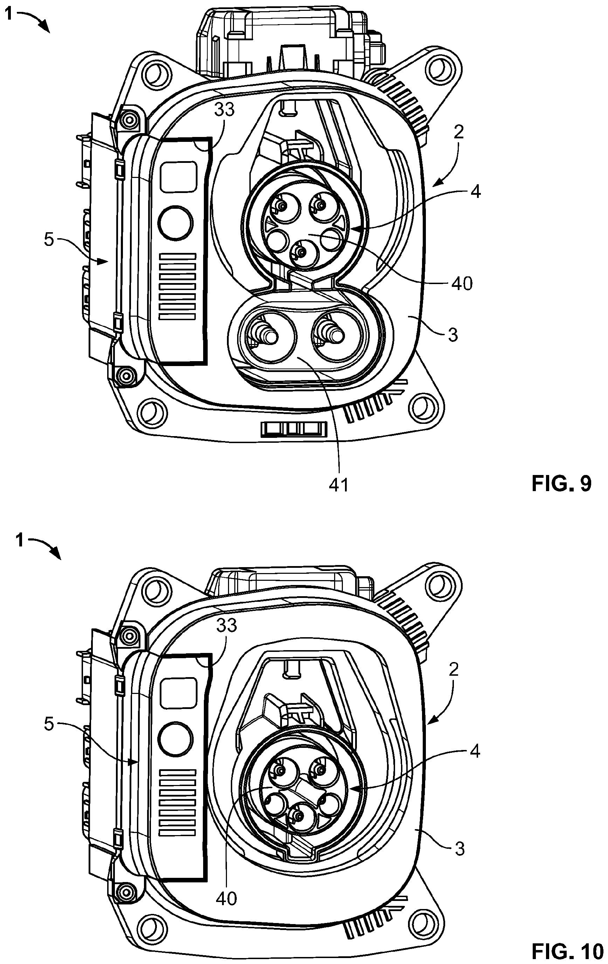

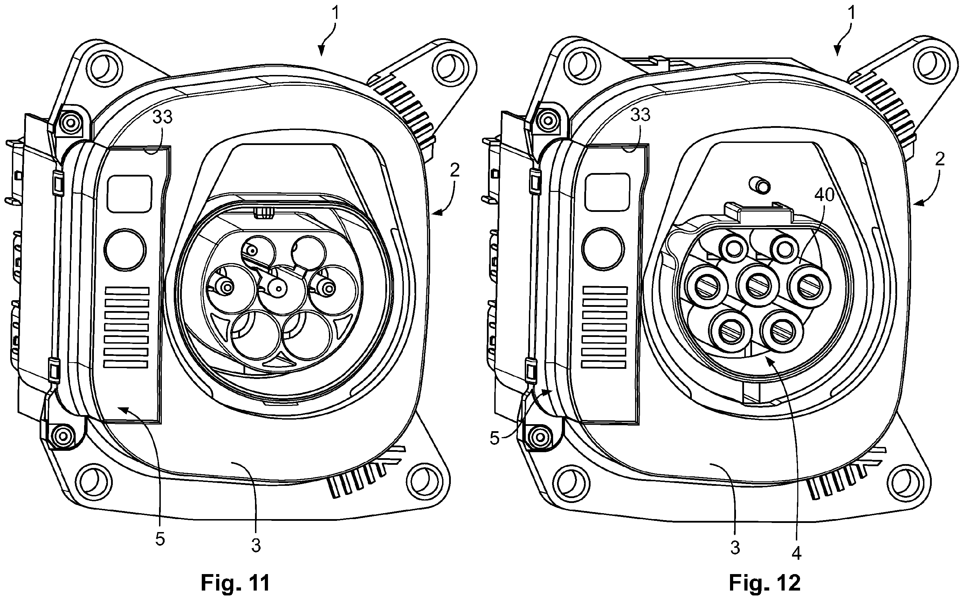

Figures 9-12 show different models of an inlet connector unit for recharging one or more batteries of a hybrid vehicle or an electric vehicle which differ from the connector unit of figures 1-3 only for the configuration of the central portion 4, which may be both of the combined type including a portion 40 for alternate current recharging and a portion 41 for direct current recharging, as in the case of figure 9, or it may be a type adapted only to alternate current recharging, but with different configurations of the contacts, as illustrated in figures 10-12.

The different models of the connector unit can be produced by only changing the central portion 4 and leaving the supporting casing 3 unaltered, with its seat 33 provided for receiving the HMI module 5.

On its turn, the HMI module 5, having the modular construction which has been described in the foregoing, can be easily and quickly adapted with different interfaces, with different configurations of the electronic control circuit and with different connectors. It is also possible to provide a connector unit without the HMI module 5, in which case the seat 33 remains empty.

Naturally, while the principle of the invention remains the same, the details of construction and the embodiments may widely vary with respect to what has been described and illustrated purely by way of example, without departing from the scope of the present invention, as defined in the appended claims.

## Claims

1. Inlet electric connector unit for recharging an electric vehicle or a hybrid vehicle, the unit comprising a connector body (2) adapted to be mounted on a vehicle and having a plurality of inlet electric contacts (42, 44) adapted to receive cooperating contacts of a connector carried by a recharging cable, wherein the connector body (2) has a central portion (4) having said inlet electric contacts (42, 44),
said connector unit being **characterized in that** the connector body (2) has at least one seat (33) which opens on a front side of the connector body (2) and located adjacent to said central portion (4) having the inlet electric contacts (42, 44), and **in that** said connector unit further comprises a human-machine interface HMI module (5) for controlling, and/or providing information on, a recharge operation, said human-machine interface HMI module (5) being removably received within said seat (33).

2. Connector unit according to claim 1, **characterized in that** said seat (33) is configured for receiving said HMI module (5) by a sliding movement of the HMI module (5) within the seat (33).

3. Connector unit according to claim 1 or claim 2, **characterized in that** it comprises a HMI module (5) including:
- a housing (50) configured for being received within said seat (33) of the connector body (2),
- at least one electronic board (51) mounted within said housing (50), and
- a supporting body (54) carrying a human-machine interface HMI (55) and mounted at one end of said housing (50).

4. Connector unit according to any of the previous claims, **characterized in that** the connector body (2) includes a supporting casing (3) to which said central portion (4) having the inlet electric contacts (42, 44) is removably connected, and **in that** the seat (33) for said HMI module (5) is formed in said supporting casing (3).

5. Connector unit according to claim 2, **characterized in that** said HMI module (5) is adapted to be mounted by a sliding movement into said seat (33) through a mutual engagement of at least one guiding rib (504) carried by one of said HMI module (5) and said connector body (2) into a cooperating guiding groove (333) formed on the other of said HMI module (5) and said connector body (2).

6. Connector unit according to claim 5, **characterized in that** said at least one guiding rib (504) and said guiding groove (333) each have a dovetail shaped profile.

7. Method for producing an inlet electric connector unit for recharging an electric vehicle or a hybrid vehicle, the method comprising the step of producing a connector body (2) with a central portion (4) having a plurality of inlet electric contacts (42, 44), said method being **characterized in that** the connector body (2) is formed with a seat (33) which opens on a front side of the connector body and **in that** a human-machine interface HMI module (5) is removably mounted into said seat (33).

8. A method according to claim 7, **characterized in that** a HMI module (5) is provided including a housing (50) configured for being removably received within said seat, at least one electronic board (51) mounted within said housing (50) and a supporting body (54) carrying a human-machine interface (55) removably mounted within one end of said housing (50) and **in that** said supporting body (54) having the interface (55) is selected among a plurality of different models provided with different types of interface

## Patentansprüche

1. Elektrische Eingangsanschlusseinheit zum Aufladen eines Elektrofahrzeugs oder eines Hybridfahrzeugs, wobei die Einheit einen Anschlusskörper (2) umfasst, der ausgebildet ist, auf einem Fahrzeug montiert zu werden, und eine Vielzahl elektrischer Eingangskontakte (42, 44) aufweist, die ausgebildet sind, zusammenwirkende Kontakte eines Anschlusses aufzunehmen, der von einem Ladekabel getragen ist, wobei der Anschlusskörper (2) einen zentralen Abschnitt (4) aufweist, der die elektrischen Eingangskontakte (42, 44) aufweist,
wobei die Anschlusseinheit **dadurch gekennzeichnet ist, dass** der Anschlusskörper (2) zumindest einen Sitz (33) aufweist, der sich an einer Vorderseite des Anschlusskörpers (2) öffnet und benachbart zu dem die elektrischen Eingangskontakte (42, 44) aufweisenden zentralen Abschnitt (4) angeordnet ist, und dadurch, dass die Anschlusseinheit ferner ein Mensch-Maschine-Schnittstellen-HMI-Modul (5) zum Steuern und/oder Bereitstellen von Informationen eines Aufladevorgangs umfasst, wobei das Mensch-Maschine-Schnittstellen-HMI-Modul (5) innerhalb des Sitzes (33) abnehmbar aufgenommen ist.

2. Anschlusseinheit nach Anspruch 1, **dadurch gekennzeichnet, dass** der Sitz (33) ausgebildet ist, das HMI-Modul (5) durch eine Gleitbewegung des HMI-Moduls (5) innerhalb des Sitzes (33) aufzunehmen.

3. Anschlusseinheit nach Anspruch 1 oder Anspruch 2, **dadurch gekennzeichnet, dass** diese ein HMI-Modul (5) umfasst, umfassend:
- ein Gehäuse (50), das ausgebildet ist, innerhalb des Sitzes (33) des Anschlusskörpers (2) aufgenommen zu werden,
- zumindest eine elektronische Platine (51), die in dem Gehäuse (50) montiert ist, und
- einen Trägerkörper (54), der ein Mensch-Maschine-Schnittstellen-HMI (55) trägt und an einem Ende des Gehäuses (50) montiert ist.

4. Anschlusseinheit nach einem der vorhergehenden Ansprüche, **dadurch gekennzeichnet, dass** der Anschlusskörper (2) ein Trägergehäuse (3) umfasst, mit dem der die elektrischen Eingangskontakte (42, 44) aufweisende zentrale Abschnitt (4) abnehmbar verbunden ist, und dadurch, dass der Sitz (33) für das HMI-Modul (5) in dem Trägergehäuse (3) gebildet ist.

5. Anschlusseinheit nach Anspruch 2, **dadurch gekennzeichnet, dass** das HMI-Modul (5) ausgebildet ist, durch eine Gleitbewegung in den Sitz (33) durch einen gegenseitigen Eingriff zwischen zumindest einer Führungsrippe (504), die von einem des HMI-Moduls (5) und des Anschlusskörpers (2) getragen ist, und einer zusammenwirkenden Führungsnut (333) montiert zu werden, die auf der anderen Seite des HMI-Moduls (5) und des Anschlusskörpers (2) gebildet ist.

6. Anschlusseinheit nach Anspruch 5, **dadurch gekennzeichnet, dass** die zumindest eine Führungsrippe (504) und die Führungsnut (333) jeweils ein schwalbenschwanzförmiges Profil aufweisen.

7. Verfahren zur Herstellung einer elektrischen Eingangsanschlusseinheit zum Aufladen eines Elektrofahrzeugs oder eines Hybridfahrzeugs, wobei das Verfahren den Schritt eines Herstellens eines Anschlusskörpers (2) mit einem zentralen Abschnitt (4) umfasst, der eine Vielzahl elektrischer Einlasskontakte (42, 44) aufweist, wobei das Verfahren **dadurch gekennzeichnet ist, dass** der Anschlusskörper (2) mit einem Sitz (33) geformt wird, der sich an einer Vorderseite des Steckerkörpers öffnet, und dadurch, dass ein Mensch-Maschine-Schnittstellen-HMI-Modul (5) in den Sitz (33) abnehmbar montiert wird.

8. Verfahren nach Anspruch 7, **dadurch gekennzeichnet, dass** ein HMI-Modul (5) bereitgestellt wird, das ein Gehäuse (50) umfasst, das ausgebildet ist, innerhalb des Sitzes abnehmbar aufgenommen zu werden, und zumindest eine in dem Gehäuse (50) montierte elektronische Platine (51) und einen Trägerkörper (54) umfasst, der eine Mensch-Maschine-Schnittstelle (55) trägt, die innerhalb eines Endes des Gehäuses (50) abnehmbar montiert ist, und dadurch, dass der die Schnittstelle (55) aufweisende Trägerkörper (54) aus einer Vielzahl unterschiedlicher Modelle ausgewählt wird, die mit verschiedenen Schnittstellentypen versehen sind.

## Revendications

1. Unité de connecteur électrique d'entrée pour recharger un véhicule électrique ou un véhicule hybride, l'unité comprenant un corps de connecteur (2) adapté pour être monté sur un véhicule et présentant une pluralité de contacts électriques d'entrée (42, 44) adaptés pour recevoir des contacts coopérants d'un connecteur porté par un câble de recharge, dans lequel le corps de connecteur (2) présente une partie centrale (4) présentant lesdits contacts électriques d'entrée (42, 44),
ladite unité de connecteur étant **caractérisée en ce que** le corps de connecteur (2) présente au moins un siège (33) qui débouche en un côté avant du corps de connecteur (2) et situé adjacent à ladite partie centrale (4) présentant les contacts électriques d'entrée (42, 44), et **en ce que** ladite unité de connecteur comprend en outre un module d'interface homme-machine IHM (5) pour commander et/ou fournir des informations sur une opération de recharge, ledit module d'interface homme-machine IHM (5) étant reçu de manière amovible à l'intérieur dudit siège (33).

2. Unité de connecteur selon la revendication 1, **caractérisée en ce que** ledit siège (33) est configuré pour recevoir ledit module IHM (5) par un mouvement coulissant du module IHM (5) à l'intérieur du siège (33).

3. Unité de connecteur selon la revendication 1 ou la revendication 2, **caractérisée en ce qu'**elle comprend un module IHM (5) comportant :
- un logement (50) configuré pour être reçu à l'intérieur dudit siège (33) du corps de connecteur (2),
- au moins une carte électronique (51) montée à l'intérieur dudit logement (50), et
- un corps de support (54) portant une interface homme-machine IHM (55) et monté à une extrémité dudit logement (50).

4. Unité de connecteur selon l'une des revendications précédentes, **caractérisée en ce que** le corps de connecteur (2) comporte un boîtier de support (3) auquel ladite partie centrale (4) présentant les contacts électriques d'entrée (42, 44) est connectée de manière amovible, et **en ce que** le siège (33) pour ledit module IHM (5) est formé dans ledit boîtier de support (3).

5. Unité de connecteur selon la revendication 2, **caractérisée en ce que** ledit module IHM (5) est adapté pour être monté par un mouvement coulissant dans ledit siège (33) par un engagement mutuel d'au moins une nervure de guidage (504) portée par l'un parmi ledit module IHM (5) et ledit corps de connecteur (2) dans une rainure de guidage coopérante (333) formée sur l'autre parmi ledit module IHM (5) et ledit corps de connecteur (2).

6. Unité de connecteur selon la revendication 5, **caractérisée en ce que** ladite au moins une nervure de guidage (504) et ladite rainure de guidage (333) présentent chacune un profil en forme de queue d'aronde.

7. Procédé de production d'une unité de connecteur électrique d'entrée pour recharger un véhicule électrique ou un véhicule hybride, le procédé comprenant l'étape de production d'un corps de connecteur (2) avec une partie centrale (4) présentant une pluralité de contacts électriques d'entrée (42, 44), ledit procédé étant **caractérisé en ce que** le corps de connecteur (2) est formé avec un siège (33) qui débouche en un côté avant du corps de connecteur et **en ce qu'**un module d'interface homme-machine IHM (5) est monté de manière amovible dans ledit siège (33).

8. Procédé selon la revendication 7, **caractérisé en ce qu'**un module IHM (5) comportant un logement (50) configuré pour être reçu de manière amovible à l'intérieur dudit siège, au moins une carte électronique (51) montée à l'intérieur dudit logement (50) et un corps de support (54) portant une interface homme-machine (55) monté de manière amovible à l'intérieur d'une extrémité dudit logement (50) et **en ce que** ledit corps de support (54) présentant l'interface (55) est sélectionné parmi une pluralité de modèles différents prévus avec différents types d'interface.
